# EUROPÄISCHE PATENTSCHRIFT

(11) **EP 3 800 974 B1**
(45) Veröffentlichungstag und Bekanntmachung des Hinweises auf die Patenterteilung: **08.01.2025**
(21) Anmeldenummer: 19734672.9
(22) Anmeldetag: 05.06.2019
(51) Int. Cl.: A01B 63/22, B66F 9/06

(54) **LANDWIRTSCHAFTLICHES GERÄT**
AGRICULTURAL DEVICE
APPAREIL AGRICOLE

(30) Priorität: 05.06.2018 DE 102018208852; 06.06.2018 DE 102018208964
(43) Veröffentlichungstag der Anmeldung: 14.04.2021
(73) Patentinhaber: Lemken GmbH & Co KG, 46519 Alpen (DE)
(72) Erfinder: PAULESSEN, Georg, 47877 Willich (DE); KOCH, Florian, 46485 Wesel (DE); JANSSEN, Michael, 47626 Kevelaer (DE); NEPICKS, Johannes, 46519 Alpen (DE)
(86) Internationale Anmeldenummer: PCT/DE2019/100498
(87) Internationale Veröffentlichungsnummer: WO 2019/233527

(56) Entgegenhaltungen:
- EP-A1- 3 022 997
- EP-A1- 3 022 997
- EP-A2- 1 175 818
- EP-A2- 1 175 818
- EP-A2- 2 165 893
- EP-A2- 2 165 893
- EP-B1- 1 175 818
- GB-A- 1 155 180
- GB-A- 1 155 180

## Beschreibung

Die Erfindung betrifft ein landwirtschaftliches Gerät, das mit einem Schlepper oder ähnlichem verbunden und zur Bodenbearbeitung gezogen werden kann.

Gezogene landwirtschaftliche Geräte werden üblicherweise über einen mittig angeordneten Anbringungsbereich mit einem Schlepper verbunden, so dass dieser das Gerät während des Transports oder während einer Bodenbearbeitung ziehend bewegen kann. Der Anbringungsbereich bildet dabei bei der Bodenbearbeitung den vorderen Punkt eines sogenannten Aufstandsdreiecks, das zwischen dem Anbringungsbereich und Walzen des Geräts ausgebildet wird.

Das Aufstandsdreieck wird allerdings mit zunehmender Arbeitsbreite, also mit quer zur Bewegungsrichtung größer werdender Dimension des Geräts bei gleich oder im Wesentlichen gleich bleibender Länge, stetig stumpfer. Dies führt dazu, dass ein zunehmender Anteil der am landwirtschaftlichen Gerät vorgesehenen Arbeitswerkzeuge außerhalb des zwischen dem Anbringungsbereich und den Walzen des Geräts aufgespannten Aufstandsdreiecks liegt, so dass das landwirtschaftliche Gerät zum Taumeln und Kippen neigt.

Um diesem Umstand entgegenzuwirken, werden an einem solchen landwirtschaftlichen Gerät vorlaufende Stützräder vorgesehen. Allerdings ist es technisch anspruchsvoll, diese Stützräder in das Gesamtsystem zu integrieren.

Als gewissermaßen einfachste Lösung können die vorlaufenden Stützräder mechanisch oder hydraulisch verstellt werden, und verbleiben während der Bodenbearbeitung in einem relativ zum Rahmen des landwirtschaftlichen Geräts fixierten Zustand. Dies führt jedoch dazu, dass das landwirtschaftliche Gerät von den Stützrädern, dem Anbringungsbereich am Schlepper und der Nachlaufwalze geführt wird. Mit anderen Worten ist das System mechanisch überbestimmt und der tatsächliche Traganteil der Komponenten variiert in Abhängigkeit von der Einstellung des Geräts und der Topographie des Untergrunds. Wird das landwirtschaftliche Gerät über ein unebenes Terrain gezogen, kommt es folglich zu stark schwankenden Traganteilen der jeweiligen Komponenten, so dass alle die Gewichtskräfte ggf. aufnehmenden Komponenten des Geräts jeweils für einen extremen Belastungsfall ausgelegt werden müssen. Dies führt zu einem relativ hohen konstruktiven Aufwand und damit zu entsprechenden Kosten. Darüber hinaus erhöht sich das Gewicht des landwirtschaftlichen Geräts.

Ferner ist es bekannt, bei einem landwirtschaftlichen Gerät starre Stützräder und eine vertikal frei bewegliche Deichsel zu verwenden, mit der lediglich Zugkräfte zu übertragen wären. Somit ist das System mechanisch nicht überbestimmt. Allerdings hat es sich als Nachteil erwiesen, dass auf den Schlepper keine Stützlast übertragen werden kann.

Als weitere Variante sind im Allgemeinen aktiv geregelte Systeme bekannt. Aktiv geregelte Systeme sind jedoch relativ aufwändig und somit kostenintensiv. Darüber hinaus muss eine zusätzliche Energiequelle vorgesehen werden, die beispielsweise am Schlepper vorgehalten und mit dem landwirtschaftlichen Gerät verbunden werden muss. Derartige Systeme sind beispielsweise aus der GB 1 155 180 A, der EP 3 022 997 A1, EP 2 165 893 A2 oder der EP 1 175 818 A2 bekannt.

Ein Ziel der Erfindung ist es, ein landwirtschaftliches Gerät mit Stützrädern zur Gewährleistung eines ruhigen Laufs des landwirtschaftlichen Geräts bereitzustellen, wobei die konstruktive Ausgestaltung eine kostengünstige Ausführung ermöglichen soll.

Der Gegenstand des Anspruchs 1 stellt ein entsprechendes landwirtschaftliches Gerät bereit. Weitere bevorzugte Ausführungsformen sind in den abhängigen Ansprüchen aufgeführt.

Das landwirtschaftliche Gerät umfasst einen Rahmen mit einem Mittelabschnitt, wobei das landwirtschaftliche Gerät mittels eines Anbringungsbereichs des Rahmens mit einem Schlepper verbindbar ist. Ferner sind ein erstes Stützrad, das mit einem ersten Abstützmechanismus relativ zum Rahmen abgestützt ist, und ein zweites Stützrad, das mit einem zweiten Abstützmechanismus relativ zum Rahmen abgestützt ist, vorgesehen. Dabei sind der erste Abstützmechanismus und der zweite Abstützmechanismus miteinander gekoppelt und stehen mit einem Energiespeicher in Verbindung, sodass das erste Stützrad und das zweite Stützrad kraftgeführt in Übereinstimmung relativ zum Rahmen ausstellbar sind.

Den Stützrädern des erfindungsgemäßen, landwirtschaftlichen Geräts wird ein Traganteil zugesprochen, bei dem die Stabilisierung des landwirtschaftlichen Geräts gewährleistet wird. Da die Stützräder miteinander gekoppelt sind, haben diese stets das gleiche Höhenverhältnis zum Rahmen. Die übrige Gewichtskraft wird vom Schlepper/Zugfahrzeug und den Nachlaufwalzen übernommen. Bei der Bodenbearbeitung wird ein Aufstandsdreieck zwischen dem Anbringungsbereich und den Nachlaufwalzen ausgebildet, wobei die Nachlaufwalzen insbesondere pendelnd gelagert sind.

Die Stützräder sind so gekoppelt, dass diese parallel zueinander verfahren. Dabei wird durch die Kopplung ein Vorspanndruck über einen Energiespeicher definiert, so dass die Stützräder kraftgeführt in Übereinstimmung relativ zum Rahmen ausstellbar sind. Das erfindungsgemäße landwirtschaftliche Gerät ist somit konstruktiv derart ausgeführt, dass eine vergleichsweise kostengünstige Lösung bereitgestellt werden kann.

Das landwirtschaftliche Gerät kann ein Fahrwerk aufweisen, mit dem das landwirtschaftliche Gerät beim Straßentransport abgestützt wird. Alternativ zu einem Fahrwerk kann das landwirtschaftliche Gerät auch mittels einer Dreipunkt-Aufnahme am Schlepper gekoppelt sein, so dass das landwirtschaftliche Gerät beim Straßentransport angehoben wird.

In einer Ausführungsform ist es vorgesehen, dass der erste Abstützmechanismus einen ersten Zylinder und der zweite Abstützmechanismus einen zweiten Zylinder aufweist, wobei der erste und zweite Zylinder mittels eines Hydrauliksystems miteinander gekoppelt sind. Dies ermöglicht eine präzise Führung der Stützräder.

Es ist bevorzugt, dass das Hydrauliksystem eine erste Hydraulikleitung und eine zweite Hydraulikleitung umfasst. Somit ist eine präzise Führung der Stützräder möglich.

Ferner ist es bevorzugt, dass das Hydrauliksystem einen Hydraulikspeicher als Energiespeicher umfasst, der als Blasenspeicher, insbesondere Stickstoffblasenspeicher, ausgebildet ist, wobei der Hydraulikspeicher mit der ersten oder zweiten Hydraulikleitung fluidmäßig verbunden ist. Somit wird die Kraft, mit der die Stützräder gemeinsam drücken, durch den Vorspanndruck im Blasenspeicher definiert.

Gemäß einer weiteren Variante ist es vorgesehen, dass die erste Hydraulikleitung mit der in Richtung des ersten Stützrads wirkenden Seite des ersten Zylinders und der vom zweiten Stützrad weg wirkenden Seite des zweiten Zylinders verbunden ist, und die zweite Hydraulikleitung mit der vom ersten Stützrad weg wirkenden Seite des ersten Zylinders und der in Richtung des zweiten Stützrads wirkenden Seite des zweiten Zylinders verbunden ist. Auf diese Weise wird ein Master-Slave-Verbund bereitgestellt, mit dem gewährleistet wird, dass die Stützräder stets parallel verstellt werden.

Es ist bevorzugt, dass das Hydrauliksystem eine Kopplungs-Hydraulikleitung umfasst, um den ersten und zweiten Zylinder zu koppeln, wobei als Energiespeicher eine Feder, insbesondere eine Druckfeder, vorgesehen ist, die auf einen Kolben des ersten und/oder zweiten Zylinders eine Druckkraft ausübt. Somit wird eine kompakte und zuverlässige Anordnung bereitgestellt.

Alternativ oder zusätzlich ist es möglich, dass der erste und zweite Abstützmechanismus mittels einer Koppelstange gekoppelt sind, wobei als Energiespeicher eine Feder, insbesondere Druckfeder, vorgesehen ist, um die Koppelstange gegenüber dem Rahmen abzustützen. Diese Ausführungsform hat sich als äußerst robust für den Einsatz in der Landwirtschaft erwiesen.

Der Rahmen kann einen ersten Rahmenflügel und einen zweiten Rahmenflügel umfassen, die sich vom Mittelabschnitt in entgegengesetzten Richtungen erstrecken, wobei das erste Stützrad in einem Endbereich des ersten Rahmenflügels und das zweite Stützrad in einem Endbereich des zweiten Rahmenflügels angeordnet ist.

Am ersten Rahmenflügel und am zweiten Rahmenflügel können jeweils ein oder mehrere Arbeitsgeräte/Arbeitswerkzeuge angebracht sein, beispielsweise eine oder mehrere Scheibeneggen.

Es ist bevorzugt, dass der erste Rahmenflügel mittels eines ersten Stellmittels mit dem Mittelabschnitt in Verbindung steht und der zweite Rahmenflügel mittels eines zweiten Stellmittels mit dem Mittelabschnitt in Verbindung steht, so dass der erste Rahmenflügel und der zweite Rahmenflügel relativ zum Mittelabschnitt geschwenkt werden können. Somit kann das landwirtschaftliche Gerät während des Transports auf der Straße kompakt angeordnet und entsprechend transportiert werden.

Es ist bevorzugt, dass das erste Stützrad an einem Gelenkelement angebracht ist, das mittels eines Gelenks mit dem Rahmen verbunden ist, und das zweite Stützrad an einem Gelenkelement angebracht ist, das mittels eines Gelenks mit dem Rahmen verbunden ist. Somit wird eine robuste Ausführung des landwirtschaftlichen Geräts gewährleistet.

Vorzugsweise sind das erste Stützrad und das zweite Stützrad gleich vom Mittelabschnitt des Rahmens beabstandet, um beidseitig eine gleichartige Abstützung zu gewährleisten.

Ferner ist es gemäß einer Ausführungsform vorgesehen, dass der Rahmen mehrteilig ausgebildet ist, wobei ein in Fahrrichtung hinterer Bereich das Fahrwerk und ein in Fahrrichtung vorderer Bereich die Stützräder umfasst, wobei der vordere Bereich und der hintere Bereich relativ zueinander bewegbar sind. Somit kann das landwirtschaftliche Gerät zwischen einem für den Transport auf der Straße geeigneten Aufbau und einer für den Arbeitseinsatz bevorzugten Konfiguration verändert werden. Im letzteren Fall können die Nachlaufwalze(n) eine Abstützung des landwirtschaftlichen Geräts gegenüber dem Untergrund übernehmen.

Es ist bevorzugt, dass das erste Stützrad und das zweite Stützrad in Fahrrichtung vor dem Fahrwerk angeordnet sind, so dass die Stützräder sogenannte vorlaufende Stützräder darstellen.

Das erste Stützrad und das zweite Stützrad können jeweils einen geringeren Durchmesser aufweisen als Räder des Fahrwerks. Die Stützräder sind somit für den vergleichsweise langsamen Einsatz, insbesondere während einer Bodenbearbeitung mit dem landwirtschaftlichen Gerät, ausgelegt.

Das erste Stützrad und das zweite Stützrad können zusätzlich höhenverstellbar sein, um eine Voreinstellung der Stützräder vornehmen zu können.

In einer weiteren Variante ist es vorgesehen, dass das Gewicht des Rahmens im Wesentlichen durch eine Nachlaufwalze und, bei Anbringung des landwirtschaftliches Geräts an einem Schlepper, durch einen mit dem am Anbringungsbereich verbundenen Schlepper aufgenommen wird. Ein kleinerer Traganteil wird somit durch die Stützräder aufgenommen, um ein Kippen des landwirtschaftlichen Geräts zu verhindern.

In einer weiteren Ausführungsform ist es vorgesehen, dass das landwirtschaftliche Gerät ein oder mehrere weitere Stützräder aufweist, die zusätzlich zum ersten und zweiten Stützrad vorgesehen sind. Das oder die weiteren Stützräder sind bevorzugt im Verbund mit dem ersten und zweiten Stützrad vorgesehen. Auf diese Weise kann das Einsatzspektrum des landwirtschaftlichen Geräts nochmals erweitert werden.

Neben dem landwirtschaftlichen Gerät selbst betrifft die Erfindung auch die Verwendung des landwirtschaftlichen Geräts gemäß einem der vorangegangenen Aspekte zur Bodenbearbeitung.
- Fig. 1: ist eine perspektivische Darstellung einer ersten Ausführungsform des erfindungsgemäßen landwirtschaftlichen Geräts
- Fig. 2: zeigt eine schematische Darstellung des landwirtschaftlichen Geräts gemäß der ersten Ausführungsform
- Fig. 3: zeigt eine schematische Darstellung des landwirtschaftlichen Geräts gemäß einer zweiten Ausführungsform
- Fig. 4: zeigt eine schematische Darstellung des landwirtschaftlichen Geräts gemäß einer dritten Ausführungsform

Anhand der Figuren werden bevorzugte Ausführungsformen der Erfindung beschrieben, um die Erfindung anhand anschaulicher Beispiele zu beschreiben. Obwohl die Ausführungsformen nicht einschränkend, sondern rein beispielhaft, sind, können Merkmale der Ausführungsformen auch einzeln zur Spezifizierung der Erfindung herangezogen werden. Modifikationen von Merkmalen der Ausführungsform können mit Varianten anderer Merkmale der Ausführungsform kombiniert werden, um weitere Ausführungsformen der Erfindung auszubilden.

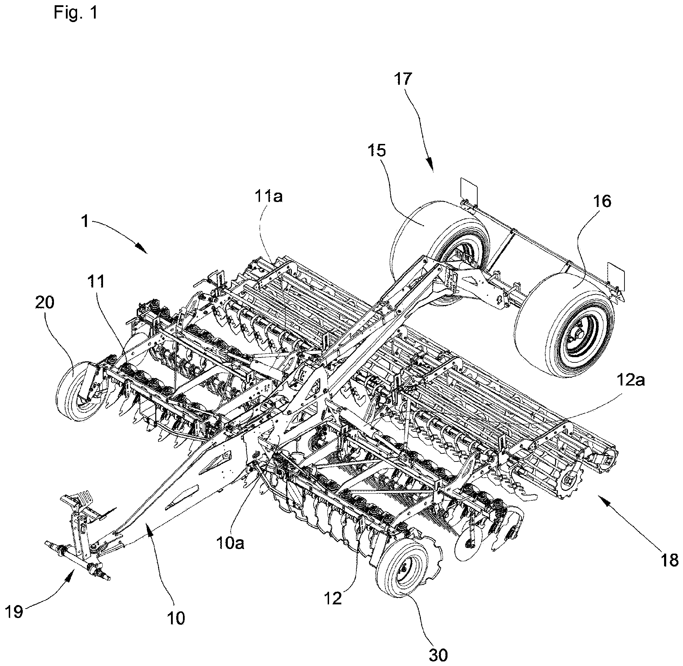

Fig. 1 zeigt eine erste Ausführungsform eines landwirtschaftlichen Geräts 1 gemäß der Erfindung. Das landwirtschaftliche Gerät 1 umfasst einen Rahmen 10, der einen sich mittig erstreckenden Mittelabschnitt 10a aufweist. Der Rahmen 10 umfasst einen Anbringungsbereich 19, der in Fahrrichtung einen vorderen Abschnitt des landwirtschaftlichen Geräts 1 bildet und der mit einem Schlepper, insbesondere einem Traktor, verbunden werden kann. An der vom Anbringungsbereich 19 entgegengesetzten Seite ist ein Fahrwerk 17 vorgesehen, das zwei Räder 15, 16 umfasst. Wird das landwirtschaftliche Gerät 1 beispielsweise über eine Straße gezogen, so wird das landwirtschaftliche Gerät 1 primär über die Räder 15, 16 sowie über den Anbringungsbereich 19 abgestützt.

Ausgehend vom Mittelabschnitt 10a des Rahmens 10 erstrecken sich beidseitig Rahmenflügel 11, 12, die jeweils Arbeitsgeräte aufnehmen. In Fahrrichtung zwischen den Rahmenflügel 11, 12 und den Rädern 15, 16 sind Nachlaufwalzen 18 vorgesehen, die eine Abstützung des landwirtschaftlichen Geräts 1 während der Bodenbearbeitung übernehmen. Im Ausführungsbeispiel sind die Nachlaufwalzen 18 pendelnd gelagert.

Bei der Bodenbearbeitung wird ein Aufstandsdreieck zwischen dem Anbringungsbereich 19 und den Nachlaufwalzen 18 ausgebildet. Die Spitzen des Aufstandsdreiecks im Bereich der Walzen 18 befinden sich dabei zwischen einem äußersten Abschnitt der Nachlaufwalzen 18 und einer Verlängerung des Mittelabschnitt 10a des Rahmens 10.

Der erste Rahmenflügel 11 ist mittels eines ersten Stellmittels 11a, das vorliegend als Hydraulikzylinder ausgebildet ist, mit dem Mittelabschnitt 10a des Rahmens 10 in Verbindung. Entsprechend ist der zweite Rahmenflügel 12 mittels eines zweiten Stellmittels 12a, das im Ausführungsbeispiel ebenfalls als Hydraulikzylinder ausgebildet ist, mit dem Mittelabschnitt 10a des Rahmens 10 in Verbindung. Durch die Stellmittel 11a, 12a können die Rahmenflügel 11, 12 jeweils relativ zum Mittelabschnitt 10a des Rahmens 10 geschwenkt werden.

An einem vom Mittelabschnitt 10a des Rahmens 10 weg weisenden Ende des ersten Rahmenflügels 11 ist ein erstes Stützrad 20 vorgesehen, und an einem vom Mittelabschnitt 10a des Rahmens 10 weg weisenden Ende des zweiten Rahmenflügels 12 ist ein zweites Stützrad 30 vorgesehen.

Die Stützräder 20, 30 sind im vorliegenden Ausführungsbeispiel sogenannte vorlaufende Stützräder, da der Eingriffsbereich der an den Rahmenflügel angebrachten Arbeitswerkzeuge und derjenige der Nachlaufwalzen 18 in Fahrtrichtung nachgelagert sind.

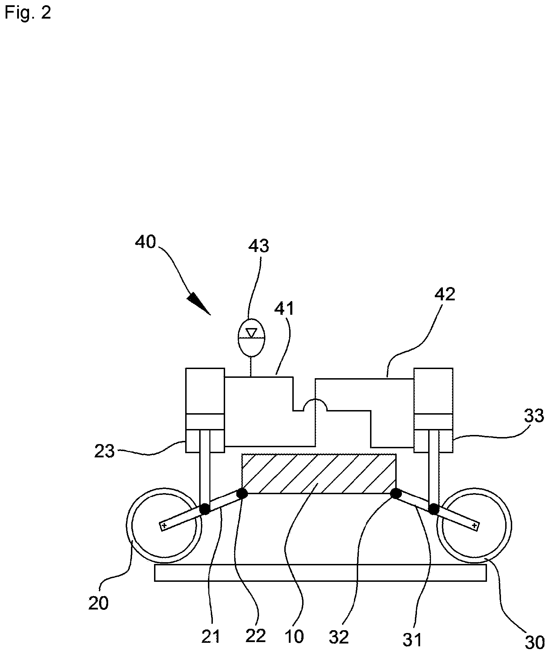

Anhand von Fig. 2 kann die Kopplung des ersten Stützrads 20 und des zweiten Stützrads 30 anschaulich beschrieben werden. Insbesondere ist das erste Stützrad 20 mittels eines Gelenkelements 21 mit dem Rahmen 10 in Verbindung, und kann mittels des Gelenkelements 21 relativ zum Rahmen um ein Gelenk 22 verschwenkt werden. Das zweite Stützrad 30 ist an einem Gelenkelement 31 angebracht, wobei das Gelenkelement 31 mittels eines Gelenks 32 mit dem Rahmen 10 verbunden ist. Somit kann das zweite Stützrad 30 relativ zum Rahmen 10 verschwenkt werden.

Im Bereich des ersten Stützrads 20 ist ein erster Zylinder 23 vorgesehen, der einen Kolben aufnimmt. Der Kolben des ersten Zylinders 23 ist mit dem Gelenkelement 21 in Verbindung und stützt dieses relativ zum Rahmen 10 ab.

Im Bereich des zweiten Stützrads 30 ist ein zweiter Zylinder 33 vorgesehen, der ein Kolbenelement aufnimmt. Das Kolbenelement des zweiten Zylinders 33 stützt das Gelenkelement 31 relativ zum Rahmen 10 ab.

Die Zylinder 23, 33 sind in einem Master-Slave-Verbund miteinander gekoppelt. Insbesondere ist die obere Zylinderkammer des ersten Zylinders 23 mittels einer Hydraulikleitung 41 eines Hydrauliksystems 40 mit einer unteren Zylinderkammer des zweiten Zylinders 33 in Verbindung. Die untere Zylinderkammer des ersten Zylinders 23 ist mittels einer zweiten Hydraulikleitung 42 des Hydrauliksystems 40 mit der oberen Zylinderkammer des zweiten Zylinders 33 in Verbindung.

Im vorliegenden Ausführungsbeispiel ist an der ersten Hydraulikleitung 41 ein Hydraulikspeicher (Energiespeicher) angeschlossen, der vorliegend als sogenannter Blasenspeicher ausgebildet ist. Im Hydraulikspeicher 43 ist somit ein definierter Vorspanndruck vorgesehen, der durch eine Stickstoffblase definiert ist. Die Kraft, mit der die Stützräder 20, 30 gemeinsam gedrückt werden, wird durch den Vorspanndruck in der Stickstoffblase des Hydraulikspeichers definiert.

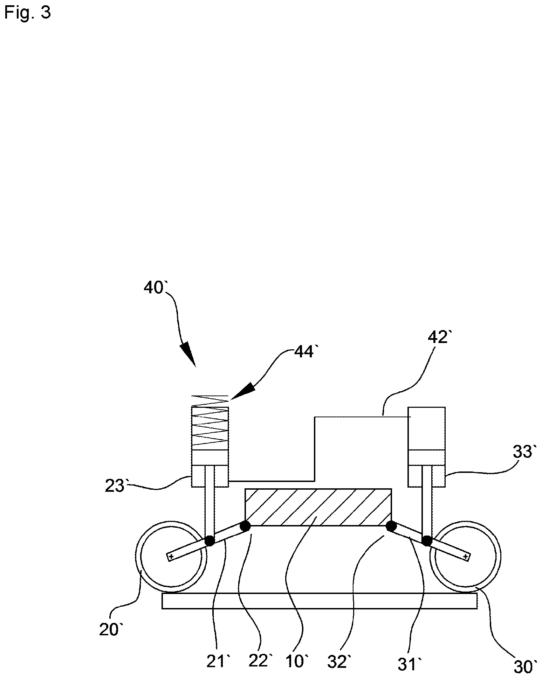

Anhand von Fig. 3 wird eine zweite Ausführungsform erläutert. Ähnliche Elemente wie in der ersten Ausführungsform sind mit entsprechenden Bezugszeichen gekennzeichnet. Zusätzlich zu den nachfolgenden Erläuterungen wird auch auf die vorangegangene Beschreibung der ersten Ausführungsform verwiesen. Dies betrifft insbesondere den konstruktiven Aufbau des landwirtschaftlichen Geräts gemäß Fig. 1, der in der Ausführungsform gemäß Fig. 3 ähnlich umgesetzt sein kann.

Die zweite Ausführungsform betrifft ein landwirtschaftliches Gerät mit einem Rahmen 10`, wobei das landwirtschaftliche Gerät ein erstes Stützrad 20' und ein zweites Stützrad 30' aufweist. Das erste Stützrad 20` ist mittels eines Gelenkelements 21' mit dem Rahmen 10` in Verbindung und kann anhand des Gelenkelements 21' relativ zum Rahmen 10' um ein Gelenk 22' verschwenkt werden. Das zweite Stützrad 30' ist an einem Gelenkelement 31' angebracht. Das Gelenkelement 31' ist mittels eines Gelenks 32' mit dem Rahmen 10` verbunden, sodass das zweite Stützrad 30' relativ zum Rahmen 10` verschwenkt werden kann.

Das landwirtschaftliche Gerät der zweiten Ausführungsform umfasst einen ersten Zylinder 23`, der am Gelenkelement 21' des ersten Stützrads 20' abgestützt ist. Ferner ist ein zweiter Zylinder 33' vorgesehen, der am Gelenkelement 31' des zweiten Stützrads 30' abgestützt ist. Die untere Kammer des ersten Zylinders 23' ist mittels einer Kopplungs-Hydraulikleitung 42' eines Hydrauliksystems (40`) mit einer oberen Kammer des zweiten Zylinders 33` fluidmäßig in Verbindung. Somit sind die Zylinder 23' und 33' miteinander gekoppelt. Am ersten Zylinder 23` ist eine Feder 44` vorgesehen, die als Energiespeicher dient und den Kolben des ersten Zylinders 23' vorspannt. Somit dient die Feder 44' als Energiespeicher, sodass das erste Stützrad 20' und das zweite Stützrad 30' kraftgeführt in Übereinstimmung relativ zum Rahmen 10' ausstellbar sind.

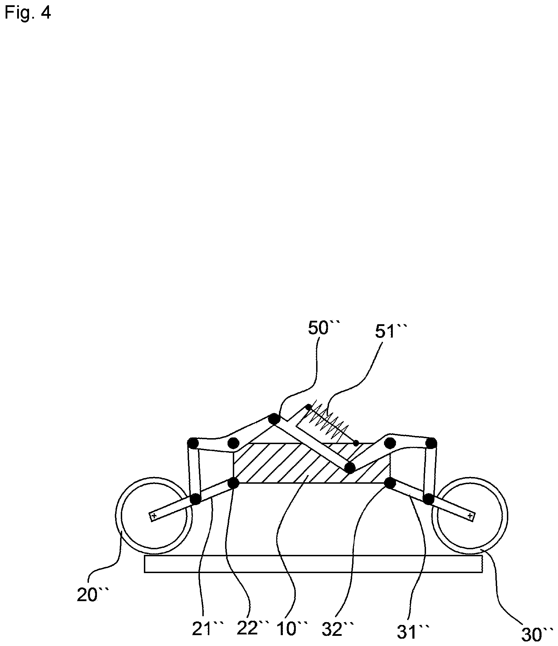

Fig. 4 zeigt eine dritte Ausführungsform der Erfindung. Ähnlich der Komponenten wie in der ersten Ausführungsform sind doch entsprechende Bezugszeichen gekennzeichnet. Zusätzlich zur nachfolgenden Erläuterung der dritten Ausführungsform wird auf die Erklärungen zur ersten Ausführungsform verwiesen. Dies gilt insbesondere für die detaillierte Beschreibung zu Fig. 1 der ersten Ausführungsform.

Die dritten Ausführungsform betrifft ein landwirtschaftliches Gerät mit einem Rahmen 10", wobei das landwirtschaftliche Gerät ein erstes Stützrad 20" und ein zweites Stützrad 30" aufweist. Das erste Stützrad 20" ist mittels eines Gelenkelements 21" mit dem Rahmen 10" in Verbindung und kann anhand des Gelenkelements 21" relativ zum Rahmen 10" um ein Gelenk 22" verschwenkt werden. Das zweite Stützrad 30" ist an einem Gelenkelement 31" angebracht. Das Gelenkelement 31" ist mittels eines Gelenks 32" mit dem Rahmen 10" verbunden, sodass das zweite Stützrad 30' relativ zum Rahmen 10" verschwenkt werden kann.

Die zweite Ausführungsform unterscheidet sich dadurch von der ersten Ausführungsform, das anstelle von Hydraulikzylindern eine mechanische Kopplung zwischen dem ersten Stützrad 20" und dem zweiten Stützrad 30" bereitgestellt ist. Insbesondere umfasst das landwirtschaftliche Gerät gemäß der dritten Ausführungsform eine Koppelstange 50", die jeweils mittels eines Kniehebelmechanismus mit den Gelenkelementen 21" und 31" in Verbindung steht, wobei die Koppelstange 50" mittels einer Druckfeder 51" gegenüber dem Rahmen 10" abgestützt ist. Die Druckfeder 51" dient dabei als Energiespeicher, sodass das erste Stützrad 20" und das zweite Stützrad 30" kraftgeführt in Übereinstimmung relativ zum Rahmen 10" ausstellbar sind.

Es ist ersichtlich, dass das landwirtschaftliche Gerät gemäß den Ausführungsformen um weitere Arbeitswerkzeuge erweitert werden kann.

Obwohl die Ausführungsformen anhand eines landwirtschaftlichen Geräts beschrieben wurden, das mit Arbeitswerkzeugen zur Bodenbearbeitung ausgestattet ist, ist ersichtlich, dass das landwirtschaftliche Gerät gemäß weiteren Ausführungsformen auch für einen anderen Einsatz ausgebildet sein kann, beispielsweise als Heuwender oder ähnliches.

## Patentansprüche

1. Landwirtschaftliches Gerät (1), das einen Rahmen (10) mit einem Mittelabschnitt (10a) aufweist, und das mittels eines Anbringungsbereichs (19) des Rahmens (10) mit einem Schlepper verbindbar ist, ferner umfassend:
ein erstes Stützrad (20), das mit einem ersten Abstützmechanismus relativ zum Rahmen (10) abgestützt ist, und
ein zweites Stützrad (30), das mit einem zweiten Abstützmechanismus relativ zum Rahmen (10) abgestützt ist,
**dadurch gekennzeichnet, dass**
der erste und zweite Abstützmechanismus miteinander gekoppelt sind und mit einem Energiespeicher (43, 44', 51") in Verbindung stehen,
wobei durch die Kopplung des ersten Stützrades (20) und des zweiten Stützrades (30) ein Vorspanndruck über den Energiespeicher (43, 44`, 51") definiert ist,
sodass das erste Stützrad (20) und das zweite Stützrad (30) kraftgeführt in Übereinstimmung relativ zum Rahmen (10) ausstellbar sind.

2. Landwirtschaftliches Gerät (1) gemäß Anspruch 1, **dadurch gekennzeichnet, dass** der erste Abstützmechanismus einen ersten Zylinder (23) und der zweite Abstützmechanismus einen zweiten Zylinder (33) aufweist, wobei der erste und zweite Zylinder mittels eines Hydrauliksystems (40, 40`) miteinander gekoppelt sind.

3. Landwirtschaftliches Gerät (1) gemäß Anspruch 2, **dadurch gekennzeichnet, dass** das Hydrauliksystem (40) eine erste Hydraulikleitung (41) und eine zweite Hydraulikleitung (42) aufweist und das Hydrauliksystem (40) einen Hydraulikspeicher (43) als Energiespeicher umfasst, der als Blasenspeicher ausgebildet ist, wobei der Hydraulikspeicher (43) mit der ersten oder zweiten Hydraulikleitung fluidmäßig verbunden ist.

4. Landwirtschaftliches Gerät (1) gemäß Anspruch 3, **dadurch gekennzeichnet, dass** die erste Hydraulikleitung (41) mit der in Richtung des ersten Stützrads (20) wirkenden Seite des ersten Zylinders (23) und der vom zweiten Stützrad (30) weg wirkenden Seite des zweiten Zylinders (33) verbunden ist, und die zweite Hydraulikleitung (42) mit der vom ersten Stützrad (20) weg wirkenden Seite des ersten Zylinders (23) und der in Richtung des zweiten Stützrads (30) wirkenden Seite des zweiten Zylinders (33) verbunden ist.

5. Landwirtschaftliches Gerät (1) gemäß Anspruch 2, **dadurch gekennzeichnet, dass** das Hydrauliksystem (40') eine Kopplungs-Hydraulikleitung (42') umfasst, um den ersten und zweiten Zylinder zu koppeln, wobei als Energiespeicher eine Feder, insbesondere eine Druckfeder, vorgesehen ist, die auf einen Kolben des ersten und/oder zweiten Zylinders (23', 33`) eine Druckkraft ausübt.

6. Landwirtschaftliches Gerät (1) gemäß Anspruch 1, **dadurch gekennzeichnet, dass** der erste und zweite Abstützmechanismus mittels einer Koppelstange (50") gekoppelt sind, wobei als Energiespeicher eine Feder (51"), insbesondere Druckfeder, vorgesehen ist, um die Koppelstange (50") gegenüber dem Rahmen (10) abzustützen.

7. Landwirtschaftliches Gerät (1) gemäß einem der vorangegangenen Ansprüche, **dadurch gekennzeichnet, dass** der Rahmen (10) einen ersten Rahmenflügel (11) und einen zweiten Rahmenflügel (12) umfasst, die sich vom Mittelabschnitt (10a) in entgegengesetzten Richtungen erstrecken, wobei das erste Stützrad (20) in einem Endbereich des ersten Rahmenflügels (11) und das zweite Stützrad (30) in einem Endbereich des zweiten Rahmenflügels (12) angeordnet ist.

8. Landwirtschaftliches Gerät (1) gemäß Anspruch 7, **dadurch gekennzeichnet, dass** am ersten Rahmenflügel (11) und am zweiten Rahmenflügel (12) jeweils ein oder mehrere Arbeitsgeräte angebracht sind, beispielsweise eine oder mehrere Scheibeneggen.

9. Landwirtschaftliches Gerät (1) gemäß Anspruch 7 oder 8, **dadurch gekennzeichnet, dass** der erste Rahmenflügel (11) mittels eines ersten Stellmittels (11a) mit dem Mittelabschnitt (10a) in Verbindung steht und der zweite Rahmenflügel (12) mittels eines zweiten Stellmittels (12a) mit dem Mittelabschnitt (10a) in Verbindung steht, so dass der erste Rahmenflügel (11) und der zweite Rahmenflügel (12) relativ zum Mittelabschnitt (10a) geschwenkt werden können.

10. Landwirtschaftliches Gerät (1) gemäß einem der vorangegangenen Ansprüche, dass das erste Stützrad (20) an einem Gelenkelement (21) angebracht ist, das mittels eines Gelenks (22) mit dem Rahmen verbunden ist, und das zweite Stützrad (30) an einem Gelenkelement (31) angebracht ist, das mittels eines Gelenks (32) mit dem Rahmen verbunden ist.

11. Landwirtschaftliches Gerät (1) gemäß einem der vorangegangenen Ansprüche, dass das erste Stützrad (20) und das zweite Stützrad (30) gleich vom Mittelabschnitt (10a) beabstandet sind.

12. Landwirtschaftliches Gerät (1) gemäß einem der vorangegangenen Ansprüche, **dadurch gekennzeichnet, dass** der Rahmen (10) mehrteilig ausgebildet ist, wobei ein in Fahrrichtung hinterer Bereich das Fahrwerk (17) und ein in Fahrrichtung vorderer Bereich die Stützräder (20; 30) umfasst, wobei der vordere Bereich und der hintere Bereich relativ zueinander bewegbar sind.

13. Landwirtschaftliches Gerät nach einem der vorhergehenden Ansprüche, **dadurch gekennzeichnet, dass** das erste Stützrad (20) und das zweite Stützrad (30) in Fahrrichtung vor dem Fahrwerk (17) angeordnet sind und/oder
das erste Stützrad (20) und das zweite Stützrad (30) jeweils einen geringeren Durchmesser aufweisen, als Räder (15, 16) des Fahrwerks (17), und/oder
das erste Stützrad (20) und das zweite Stützrad (30) zusätzlich höhenverstellbar sind.

14. Landwirtschaftliches Gerät nach einem der vorhergehenden Ansprüche, **dadurch gekennzeichnet, dass** das Gewicht des Rahmens (10) bei einer Bodenbearbeitung im Wesentlichen durch eine Nachlaufwalze (18) und, bei Anbringung des landwirtschaftliches Geräts an einem Schlepper, durch einen mit dem am Anbringungsbereich (19) verbundenen Schlepper aufgenommen wird.

15. Landwirtschaftliches Gerät nach einem der vorhergehenden Ansprüche, **dadurch gekennzeichnet, dass** das landwirtschaftliche Gerät ein weiteres Stützrad oder mehrere weitere Stützräder aufweist.

## Claims

1. An agricultural device (1), which has a frame (10) comprising a middle section (10a) and which can be connected to a hauler by means of a mounting region (19) of the frame (10), further comprising:
a first support wheel (20), which is supported relative to the frame (10) by means of a first support mechanism, and
a second support wheel (30), which is supported relative to the frame (10) by means of a second support mechanism,
**characterized in**
**that** the first and second support mechanism are coupled to one another and are in contact with an energy storage (43, 44', 51"), whereby, due to the coupling of the first support wheel (20) and the second support wheel (30), a biasing pressure is defined via the energy storage (43, 44', 51"),so that the first support wheel (20) and the second support wheel (30) can be positioned relative to the frame (10) under force control so as to be aligned.

2. The agricultural device (1) according to claim 1,
**characterized in**
**that** the first support mechanism has a first cylinder (23), and the second support mechanism has a second cylinder (33), wherein the first and second cylinder are coupled to one another by means of a hydraulic system (40, 40').

3. The agricultural device (1) according to claim 2,
**characterized in**
**that** the hydraulic system (40) has a first hydraulic line (41) and a second hydraulic line (42), and the hydraulic system (40) comprises a hydraulic accumulator (43) as energy storage, which is formed as bladder accumulator, wherein the hydraulic accumulator (43) is fluidically connected to the first or second hydraulic line.

4. The agricultural device (1) according to claim 3,
**characterized in**
**that** the first hydraulic line (41) is connected to the side of the first cylinder (23) acting in the direction of the first support wheel (20), and to the side of the second cylinder (33) acting away from the second support wheel (30), and that the second hydraulic line (42) is connected to the side of the first cylinder (23) acing away from the first support wheel (20), and to the side of the second cylinder (33) acting in the direction of the second support wheel (30).

5. The agricultural device (1) according to claim 2,
**characterized in**
**that** the hydraulic system (40') comprises a coupling hydraulic line (42'), in order to couple the first and second cylinder, wherein a spring, in particular a compression spring, is provided as energy storage, which exerts a compressive force on a piston of the first and/or second cylinder (23', 33').

6. An agricultural device (1) according to claim 1,
**characterized in**
**that** the first and second support mechanism are coupled by means of a coupling rod (50"), wherein a spring (51"), in particular compression spring, is provided as energy storage, in order to support the coupling rod (50") with respect to the frame (10).

7. The agricultural device (1) according to one of the preceding claims,
**characterized in**
**that** the frame (10) comprises a first frame wing (11) and a second frame wing (12), which extend from the middle section (10a) in opposite directions, wherein the first support wheel (20) is arranged in an end region of the first frame wing (11), and the second support wheel (30) is arranged in an end region of the second frame wing (12).

8. The agricultural device (1) according to claim 7,
**characterized in**
**that** one or several working implements, for example one or several disk harrows, are in each case attached to the first frame wing (11) and to the second frame wing (12).

9. The agricultural device (1) according to claim 7 or 8,
**characterized in**
**that** the first frame wing (11) is in contact with the middle section (10a) by means of a first adjusting means (11a), and that the second frame wing (12) is in contact with the middle section (10a) by means of a second adjusting means (12a), so that the first frame wing (11) and the second frame wing (12) can be pivoted relative to the middle section (10a).

10. The agricultural device (1) according to one of the preceding claims, that the first support wheel (20) is attached to a hinge element (21), which is connected to the frame by means of a hinge (22), and that the second support wheel (30) is attached to a hinge element (31), which is connected to the frame by means of a hinge (32).

11. The agricultural device (1) according to one of the preceding claims, that the first support wheel (20) and the second support wheel (30) are identically spaced apart from the middle section (10a).

12. The agricultural device (1) according to one of the preceding claims,
**characterized in**
**that** the frame (10) is formed in several parts, wherein a rear region in the driving direction comprises the chassis (17), and a front region in the driving direction comprises the support wheels (20; 30), wherein the front region and the rear region can be moved relative to one another.

13. The agricultural device according to one of the preceding claims,
**characterized in**
**that** the first support wheel (20) and the second support wheel (30) are arranged in front of the chassis (17) in the driving direction,
and/or
the first support wheel (20) and the second support wheel (30) in each case have a smaller diameter than wheels (15, 16) of the chassis (17), and/or
the first support wheel (20) and the second support wheel (30) are additionally height-adjustable.

14. The agricultural device according to one of the preceding claims, **characterized in**
**that** the weight of the frame (10) is essentially absorbed by a trailing roller (18) when working the soil and, when the agricultural device is mounted to a hauler, by a hauler, which is connected to the mounting region (19).

15. The agricultural device according to one of the preceding claims, **characterized in**
**that** the agricultural device has a further support wheel or several further support wheels.

## Revendications

1. Engin agricole (1), qui comporte un cadre (10) pourvu d'une portion centrale (10a) et qui au moyen d'une zone de montage (19) du cadre (10) peut s'assembler avec un tracteur, comprenant par ailleurs :
une première roue de support (20), qui est supportée par rapport au cadre (10) par un premier mécanisme de soutien et
une deuxième roue de support (30), qui est supportée par rapport au cadre (10) par un deuxième mécanisme de soutien,
**caractérisé en ce que**
le premier et le deuxième mécanismes de soutien sont accouplés l'un avec l'autre et sont en communication avec un accumulateur d'énergie (43, 44', 51"),
par l'accouplement de la première roue de support (20) et de la deuxième roue de support (30), une pression de précontrainte étant définie par l'intermédiaire de l'accumulateur d'énergie (43, 44', 51"),
de telle sorte que la première roue de support (20) et la deuxième roue de support (30) soient déployables sous l'effet d'une force en conformité par rapport au cadre (10).

2. Engin agricole (1) selon la revendication 1, **caractérisé en ce que** le premier mécanisme de soutien comporte un premier vérin (23) et le deuxième mécanisme de soutien comporte un deuxième vérin (33), le premier et le deuxième vérins étant accouplés l'un à l'autre par l'intermédiaire d'un système hydraulique (40, 40').

3. Engin agricole (1) selon la revendication 2, **caractérisé en ce que** le système hydraulique (40) comporte une première conduite hydraulique (41) et une deuxième conduite hydraulique (42) et le système hydraulique (40) comprend en tant qu'accumulateur d'énergie un accumulateur hydraulique (43), qui est conçu sous la forme d'un accumulateur à vessie, l'accumulateur hydraulique (43) étant fluidiquement relié avec la première ou la deuxième conduite hydraulique.

4. Engin agricole (1) selon la revendication 3, **caractérisé en ce que** la première conduite hydraulique (41) est assemblée avec le côté agissant dans la première roue de support (20) du premier vérin (23) et avec le côté agissant en éloignement de la deuxième roue de support (30) du deuxième vérin (33) et la deuxième conduite hydraulique (42) est assemblée avec le côté agissant en éloignement de la première roue de support (20) du premier vérin (23) et avec le côté agissant dans la direction de la deuxième roue de support (30) du deuxième vérin (33).

5. Engin agricole (1) selon la revendication 2, **caractérisé en ce que** le système hydraulique (40') comprend une conduite hydraulique (42') d'accouplement, pour accoupler le premier et le deuxième vérins, étant prévu en tant qu'accumulateur d'énergie un ressort, notamment un ressort de compression, qui exerce une forme de compression sur un piston du premier et / ou du deuxième vérin (23', 33').

6. Engin agricole (1) selon la revendication 1, **caractérisé en ce que** le premier et le deuxième mécanismes de soutien sont accouplés au moyen d'une barre d'accouplement (50"), étant prévu en tant qu'accumulateur d'énergie un ressort (51"), notamment un ressort de compression, destiné à soutenir la barre d'accouplement (50") par rapport au cadre (10).

7. Engin agricole (1) selon l'une quelconque des revendications précédentes, **caractérisé en ce que** le cadre (10) comprend une première aile de cadre (11) et une deuxième aile de cadre (12), qui à partir de la portion centrale (10a) s'étendent dans des directions opposées, la première roue de support (20) étant placée dans une zone d'extrémité de la première aile de cadre (11) et la deuxième roue de support (30) étant placée dans une zone d'extrémité de la deuxième aile de cadre (12) .

8. Engin agricole (1) selon la revendication 7, **caractérisé en ce que** sur la première aile de cadre (11) et sur la deuxième aile de cadre (12) sont montés chaque fois un ou plusieurs engins de travail, par exemple une ou plusieurs herses à disque.

9. Engin agricole (1) selon la revendication 7 ou 8, **caractérisé en ce que** la première aile de cadre (11) est en communication avec la portion centrale (10a) par l'intermédiaire d'un premier moyen de réglage (11a) et la deuxième aile de cadre (12) est en communication avec la portion centrale (10a) par l'intermédiaire d'un deuxième moyen de réglage (12a), de telle sorte que la première aile de cadre (11) et la deuxième aile de cadre (12) puissent être pivotées par rapport à la portion centrale (10a).

10. Engin agricole (1) selon l'une quelconque des revendications précédentes, **caractérisé en ce que** la première roue de support (20) est montée sur un élément articulé (21), qui par l'intermédiaire d'une articulation (22) est assemblé avec le cadre et la deuxième roue de support (30) est montée sur un élément articulé (31), qui par l'intermédiaire d'une articulation (32) est assemblé avec le cadre.

11. Engin agricole (1) selon l'une quelconque des revendications précédentes, **caractérisé en ce que** la première roue de support (20) et la deuxième roue de support (30) présentent le même écart par rapport à la portion centrale (10a).

12. Engin agricole (1) selon l'une quelconque des revendications précédentes, **caractérisé en ce que** le cadre (10) est conçu en plusieurs parties, une zone arrière du châssis (17) dans la direction de déplacement et une zone avant dans la direction de déplacement comprenant les roues de support (20 ; 30), la zone avant et la zone arrière étant mobiles l'une par rapport à l'autre.

13. Engin agricole selon l'une quelconque des revendications précédentes, **caractérisé en ce que** la première roue de support (20) et la deuxième roue de support (30) sont placées à l'avant du châssis (17) dans la direction de déplacement
et / ou
la première roue de support (20) et la deuxième roue de support (30) présentent chacune un diamètre plus faible que des roues (15, 16) du châssis (17)
et / ou
la première roue de support (20) et la deuxième roue de support (30) sont en supplément réglables en hauteur.

14. Engin agricole selon l'une quelconque des revendications précédentes, **caractérisé en ce que** lors d'un travail du sol, le poids du cadre (10) est sensiblement réceptionné par un rouleau suiveur (18) et lors du montage de l'engin agricole sur un tracteur, par un tracteur assemblé sur la zone de montage (19).

15. Engin agricole selon l'une quelconque des revendications précédentes, **caractérisé en ce que** l'engin agricole comporte une roue de support supplémentaire ou plusieurs roues de support.
